# EUROPEAN PATENT SPECIFICATION

(11) **EP 0 771 002 B1**
(45) Date of publication and mention of the grant of the patent: **29.05.2002**
(21) Application number: 96307656.7
(22) Date of filing: 23.10.1996
(51) Int. Cl.: G11B 21/12

(54) **Compound bearing assembly for the swing arm of a hard disc drive**
Mehrteiliger Lagerzusammenbau für den Schwenkarm eines Festplattenlaufwerks
Système à palier composé pour bras-support pivotant d'une unité de disque dur

(30) Priority: 25.10.1995 JP 30060895; 25.10.1995 JP 30060995
(43) Date of publication of application: 02.05.1997
(60) Divisional application: 01127085.7
(73) Proprietor: MINEBEA KABUSHIKI-KAISHA, Kitasaku-gun, Nagano-ken (JP)
(72) Inventor: Obara, Rikuro, c/o Minebea K. K., Kitasaku-gun, Nagano-ken (JP)
(74) Representative: Warren, Keith Stanley

(56) References cited:
- EP-A- 0 613 134
- FR-A- 2 565 017
- US-A- 5 099 374
- US-A- 5 341 569
- US-E- R E34 684

## Description

This invention relates to a compound bearing assembly supporting a swing arm of a hard disc drive.

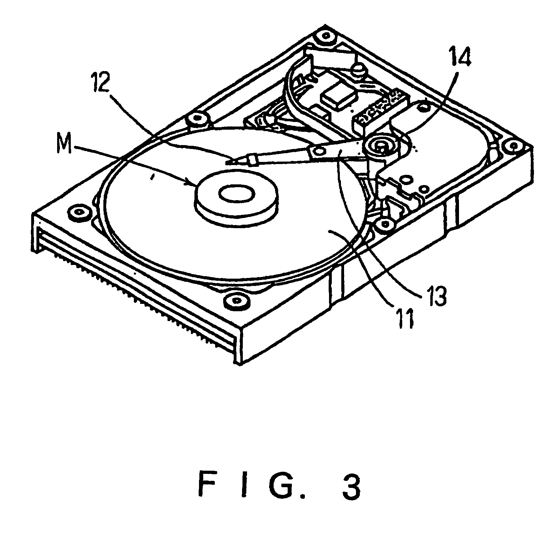

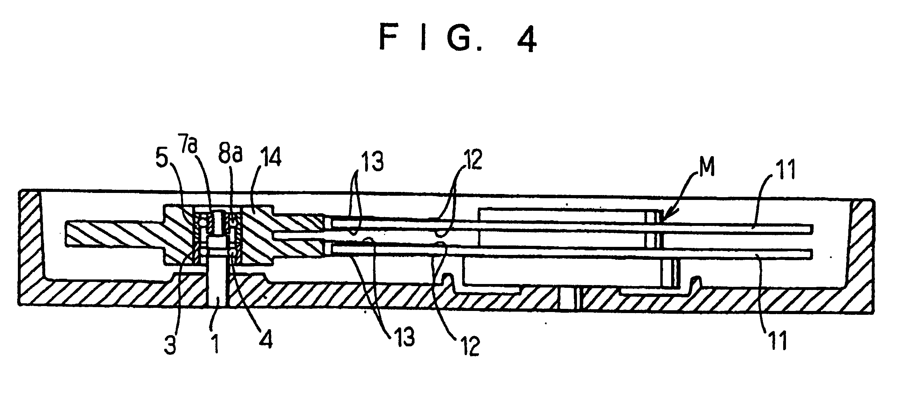

A prior art hard disc drive as shown in Figs. 3 and 4, comprises a magnetic disc 11 which is driven for rotation by a motor M, and a swing arm (or head arm) 13 carrying at the end thereof a magnetic head 12 for writing data in the disc 13 at a predetermined position thereof and reading out data from the disc 13 at a given position thereof.

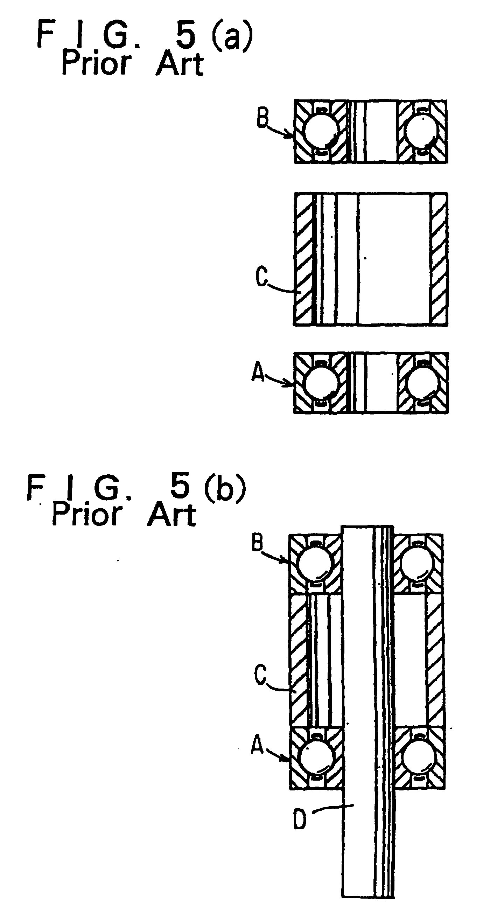

The swing arm 13 has a stem rotatably supported by a compound bearing assembly which uses two ball bearing units. As shown in Fig. 5, a prior art bearing assembly for supporting the swing arm comprises two ball bearing units A and B and a sleeve-like spacer C. These components of the bearing assembly are produced separately and supplied to the user, e.g. the hard disc drive manufacturer or the swing arm manufacturer, to be assembled on a shaft D.

In other words, with the conventional swing arm support bearing assembly, the user has to assemble the two ball bearing units on the shaft separated by the spacer. This poses the following problems.
(a) The shaft has to be manufactured so as to match the inner diameter of the inner race rings of the ball bearing units. In addition, its rigidity is subject to restrictions.
(b) The spacer must be highly accurately produced, with parallel and flat opposite end finished surfaces.
(c) It is necessary to provide uniform contact between the opposite end surfaces of the spacer and the corresponding end surfaces of the outer race rings of the ball bearing units, thus requiring highly accurate finishing.

For the above reasons, the assembly is not easily assembled by the user.

A further prior art bearing assembly for use in a hard disc drive of a computer is described in Patent US 5,341,569 (on which the preamble of claim 1 is based). The bearing assembly includes a stepped shaft having a larger diameter portion with an inner raceway groove formed directly therein and a smaller diameter portion on which an inner race ring with a further inner raceway groove formed therein is mounted. A row of balls runs between each inner raceway groove and an associated outer raceway groove formed in an inner surface of a one piece outer race ring which surrounds the shaft. The inner raceway grooves have to be very precisely positioned relative to each other in the one piece outer race ring.

An object of the invention is to provide a compound bearing assembly, which addresses the problems discussed above. It is an advantage of the present invention that the assembly can be used directly by a hard disc drive manufacturer for a swing arm of a hard disc drive.

According to the invention there is provided a combination for hard disc drive equipment including a compound bearing assembly; a hard disc drive swing arm having a boss fitted on and secured by means of adhesive to the compound bearing assembly; said compound bearing assembly comprising :
a stepped shaft having a first portion with a larger diameter than a second portion, said larger diameter portion having an inner raceway groove formed directly in an outer periphery thereof;
a first outer race ring surrounding said stepped shaft and having an outer raceway groove formed directly in an inner periphery of a portion adjacent an end thereof;
a first plurality of balls received in said inner raceway groove directly formed in said larger diameter portion and retained in said outer raceway groove formed in said first outer race ring; and
a plurality of second balls received in an inner raceway groove formed in an inner race ring fitted on said smaller diameter portion of said stepped shaft and retained in an outer raceway groove,
characterised in that said outer raceway groove retaining said second balls is formed directly in an inner periphery of a distinct second outer race ring which forms a compound member together with the first outer race ring, one of the outer race rings being sleeve-like and having the other race ring provided adjacent an opposite end to that adjacent to which its outer raceway groove is formed.

Preferably, the inner race ring fitted on the smaller diameter portion of the stepped shaft has an equal outer diameter to the outer diameter of the larger diameter portion of the stepped shaft, so that all the balls are the same diameter.

Preferably, the outer race rings have equal outer and inner diameters, so that all the balls are the same diameter.

Embodiments of the present invnetion will now be described, by way of example, with reference to the accompanying drawings, in which:-
Fig. 1 is a sectional view showing a first embodiment of the compound bearing assembly in accordance with the invention;
Fig. 2 is a sectional view showing a second embodiment of the compound bearing assembly in accordance with the invention;
Fig. 3 is a perspective view showing a hard disc drive;
Fig. 4 is a sectional view showing a swing arm supported by a compound bearing assembly in accordance with a first aspect of the invention; and
Figs. 5 (a) and 5(b) are sectional views showing a prior art swing arm bearing assembly, Fig. 5(a) showing ball bearing units and a sleeve-like spacer before being assembled, Fig. 5(b) showing the ball bearing units and sleeve-like spacer having been assembled on a shaft.

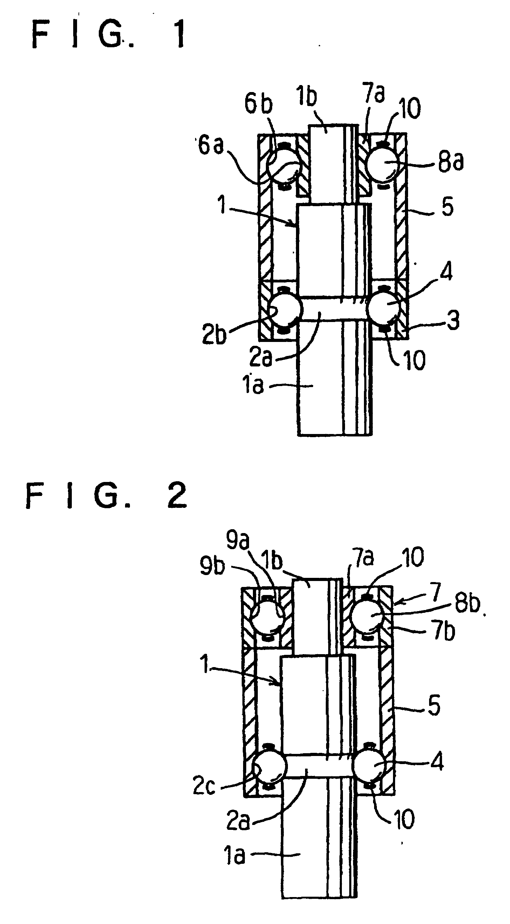

Referring to Fig. 1 a first embodiment of the invention is illustrated, in which a stepped shaft 1 has a first portion 1a having a larger diameter than a second portion 1b, the larger diameter portion 1a having an inner raceway groove 2a formed directly in the outer periphery thereof.

An outer race ring 3 is assembled on the larger diameter portion 1a of the stepped shaft 1 with a plurality of balls 4 provided between an outer raceway groove 2b formed in its inner periphery and the innerraceway groove 2a formed in the larger diameter portion 1a.

A sleeve-like outer race ring 5, surrounds the stepped shaft 1 and has an outer raceway groove 6b formed directly in the inner periphery of its outer end portion (i.e., an upper end portion in Fig. 1). The sleeve-like outer race ring 5 is assembled on the stepped shaft 1 with a plurality of balls 8a provided between the outer raceway groove 6b and an inner raceway groove 6a formed in the outer periphery of an inner race ring 7a fitted on the smaller diameter portion 1b of the stepped shaft 1.

The inner race ring 7a fitted on the smaller diameter portion 1b of the stepped shaft 1 has an outer diameter equal to the outer diameter of the larger diameter portion 1a of the stepped shaft 1, so that the balls 4 and 8a are the same in diameter.

In consutructing the assembly, the inner race ring 7a, for instance, is initially slidably fitted on the smaller diameter portion 1b of the stepped shaft 1. Then, an adequate pre-load is applied to the outer end surface (i.e., upper end surface in Fig. 1) of the inner race ring 7a, and in this state the inner race ring 7a is secured by means of an adhesive to the smaller diameter portion 1b of the stepped shaft 1. In this way, the outer race ring 3, the sleeve-like outer race ring 5 and the inner race ring 7a are assembled on the stepped shaft 1.

In this structure, the sleeve-like outer race ring 5 and the outer race ring 3 are integrated into a compound member while the outer race ring 3, the sleeve-like outer race ring 5 and the inner race ring 7a are assembled on the stepped shaft 1.

As shown in Fig. 4, the stepped shaft 1 of the compound bearing assembly obtained in the above way, is projected from the base of a hard disc drive by securing the stem of its larger diameter portion 1a to the base. Then, a boss 14 of a stem of a swing arm 13 is fitted on and secured by means of an adhesive to the compound bearing assembly.

The swing arm 13 which is thus mounted on the compound bearing assembly is rotatable about the same.

Fig. 2 shows a second embodiment of the invention. Again in this embodiment, the larger diameter portion 1a of the stepped shaft 1 has the inner raceway groove 2a formed directly in the outer periphery thereof.

In this embodiment, a sleeve-like outer race ring 5 which surrounds the stepped shaft 1, has an outer raceway groove 2c formed directly in the inner periphery of an end portion (i.e., a lower end portion in Fig. 2) of it. The balls 4 are provided between the outer raceway groove 2c and the inner raceway groove 2a of the larger diameter portion 1a.

A ball bearing unit 7 which has an inner and an outer race ring 7a and 7b and a plurality of balls 8b provided therebetween, has the inner race ring 7a fitted on and secured to the smaller diameter portion 1b of the stepped shaft 1.

The inner race ring 7a of the ball bearing unit 7 has an outer diameter equal to the outer diameter of the larger diameter portion 1a of the stepped shaft 1, and the outer race ring 7b has outer and inner diameters equal to the outer and inner diameters, respectively, of the sleeve-like outer race ring 5, so that the balls 4 and 8b are the same diameter.

In constructing the assembly, the inner race ring 7a of the ball bearing unit 7, for instance, is initially slidably fitted on the smaller diameter portion 1b of the stepped shaft 1. Then, an adequate pre-load is applied to the outer end surface (i.e., upper end surface in Fig. 2) of the inner race ring 7a, and in this state the inner race ring 7a is secured by means of an adhesive to the smaller diameter portion 1b of the stepped shaft 1.

In this way, the sleeve-like outer race ring 5 and the outer race ring 7b of the ball bearing unit 7 are made integral to be a compound member, and the sleeve-like outer race ring 5, and the inner and outer race rings 7a and 7b of the ball bearing unit 7 are assembled on the stepped shaft 1.

As described above, the stepped shaft of the compound bearing assembly thus obtained, is projected from a base of a hard disc drive by securing the stem of its larger diameter portion to the base, and then a boss 14 of a stem of a swing arm 13 is fitted on and secured by means of an adhesive to the compound bearing assembly.

While in the above first and second embodiments the balls that were used were all the same in diameter, it is possible to use balls of different diameters on the sides of the larger and smaller diameter portions 1a and 1b of the stepped shaft 1, respectively.

With the compound bearing assembly for a swing arm constructed as described in the foregoing, the following advantageous functions and effects are obtainable.
(1) Since the components of the compound bearing assembly, i.e., the sleeve-like outer race ring or spacer, the inner race ring, the outer race ring, the balls and the shaft, are all assembled by the bearing assembly manufacturer, the user need not assemble any of these components, and the compound bearing assembly can be readily and reliably mounted on a swing arm of a hard disc drive by fitting the swing arm stem boss 14 on and securing the same by means of an adhesive.
(2) Since the larger diameter portion of the stepped shaft in the bearing assembly has the inner raceway groove directly formed in its outer periphery, the conventional inner race ring is unnecessary, and correspondingly the shaft is partly increased in diameter producing a stepped shaft, which thus has increased rigidity.
(3) Only a single conventional ball bearing unit, and hence only a single inner race ring, is needed, and it is possible to provide a bearing assembly having a reduced number of components.
(4) In the first and second embodiments of the invention, the sleeve-like outer race ring also serves as a spacer, and the conventional spacer is unnecessary, thus permitting reduction of the number of components.
(5) The sleeve-like outer race ring is fabricated highly accurately by the bearing assembly manufacturer, thus improving the accuracy of the overall assembly.

## Claims

1. A combination for hard disc drive equipment including a compound bearing assembly; a hard disc drive swing arm (13) having a boss (14) fitted on and secured by means of adhesive to the compound bearing assembly ; said compound bearing assembly comprising :
a stepped shaft (1) having a first portion (1a) with a larger diameter than a second portion (1b), said larger diameter portion (1a) having an inner raceway groove (2a) formed directly in an outer periphery thereof;
a first outer race ring (3, 5) surrounding said stepped shaft (1) and having an outer raceway groove (2b, 2c) formed directly in an inner periphery of a portion adjacent an end thereof;
a first plurality of balls (4) received in said inner raceway groove (2a) directly formed in said larger diameter portion (1a) and retained in said outer raceway groove (2b, 2c) formed in said first outer race ring (3, 5); and
a plurality of second balls (8a, 8b) received in an inner raceway groove (6a, 9a) formed in an inner race ring (7a) fitted on said smaller diameter portion (1b) of said stepped shaft (1) and retained in an outer raceway groove (6b, 9b),
**characterised in that** said outer raceway groove (6b, 9b) retaining said second balls (8a, 8b) is formed directly in an inner periphery of a distinct second outer race ring (5, 7b) which forms a compound member together with the first outer race ring (3, 5), one of the outer race rings (5) being sleeve-like and having the other race ring (3, 7b) provided adjacent an opposite end to that adjacent to which its outer raceway groove (2c, 6b) is formed.

2. A combination as claimed in claim 1 wherein said second balls (8a) are retained in said outer raceway groove (6b) directly formed in the inner periphery of said sleeve-like outer race ring (5).

3. A combination as claimed in claim 1 wherein said first balls (4) are retained in said outer raceway groove (2c) directly formed in the inner periphery of said sleeve-like outer race ring (5).

## Patentansprüche

1. Eine Kombination für eine Festplattenlaufwerks-Einrichtung, beinhaltend einen Lagerzusammenbau und einen Schwenkarm eines Festplattenlaufwerks (13) mit einer am Lagerzusammenbau befestigten und mittels eines Haftstoffs gesicherten Nabe (14), wobei der Lagerzusammenbau umfasst:
eine abgestufte Welle (1) mit einem ersten Abschnitt (1a) mit einem größeren Durchmesser als ein zweiter Abschnitt (1b), wobei der Abschnitt mit dem größeren Durchmesser (1a) eine innere Laufringnut (2a) aufweist, welche direkt in einem äußeren Umfang davon ausgebildet ist;
einen ersten äußeren Laufring (3, 5), der die abgestufte Welle (1) umgibt und eine äußere Laufringnut (2b, 2c) aufweist, welche direkt in einem inneren Umfang eines Abschnitts benachbart zum Ende davon ausgebildet ist;
eine Mehrzahl von ersten Kugeln (4), die in der inneren Laufringnut (2a), welche direkt in dem Abschnitt mit dem größeren Durchmesser (1a) ausgebildet ist, aufgenommen werden und in der äußeren Laufringnut (2b, 2c), welche in dem ersten äußeren Laufring (3, 5) ausgebildet ist, gehalten werden; und
eine Mehrzahl von zweiten Kugeln (8a, 8b), die in einer inneren Laufringnut (6a, 9a), die in einem inneren, auf dem Abschnitt mit dem kleineren Durchmesser (1b) der gestuften Welle (1) angebrachten Laufring (7a) ausgebildet ist, aufgenommen und in einer äußeren Laufringnut (6b, 9b) gehalten werden,
**dadurch gekennzeichnet, dass** die äußere, die zweiten Kugeln (8a, 8b) haltende Laufringnut (6b, 9b) direkt in einem inneren Umfang eines anderen zweiten äußeren Laufrings (5, 7b) ausgebildet ist, welcher zusammen mit dem ersten äußeren Laufring (3, 5) ein Zusammenbauelement bildet, wobei einer der äußeren Laufringe (5) hülsenähnlich ist und der andere äußere Laufring (3, 7b) neben einem Ende vorgesehen ist, das dem gegenüberliegt, neben dem seine äußere Laufringnut (2c, 6b) geformt ist.

2. Eine Kombination nach Anspruch 1, wobei die zweiten Kugeln (8a) in der äußeren direkt in dem inneren Umfang des hülsenähnlichen äußeren Laufrings (5) ausgebildeten Laufringnut (6b) gehalten werden.

3. Eine Kombination nach Anspruch 1, wobei die ersten Kugeln (4) in der äußeren direkt in dem inneren Umfang des hülsenähnlichen äußeren Laufrings (5) ausgebildeten Laufringnut (2c) gehalten werden.

## Revendications

1. Combinaison destinée à un équipement d'unité d'entraînement de disque dur qui inclut un ensemble à palier composé; un bras pivotant (13) d'unité de disque dur comportant un bossage (14) monté sur l'ensemble de palier composé et attaché à celui-ci au moyen d'un adhésif; ledit ensemble de palier composé comprenant:
un arbre (1) à gradin qui inclut une première partie (1a) d'un diamètre plus grand que celui d'une deuxième partie (1b), ladite partie (1a) de diamètre plus grand comprenant une gorge (2a) de piste interne de roulement formée directement dans sa périphérie extérieure;
une première bague externe (3, 5) de roulement qui entoure ledit arbre (1) à gradin et comporte une gorge (2b, 2c) de piste externe de roulement formée directement dans une périphérie interne d'une partie adjacente à l'une de ses extrémités;
une première pluralité de billes (4) reçues dans ladite gorge (2a) de piste interne de roulement formée directement dans ladite partie (1a) de diamètre plus grand, et reçues dans ladite gorge (2b, 2c) de piste externe de roulement formée dans ladite première bague externe (3, 5) de roulement; et
une pluralité de deuxièmes billes (8a, 8b) reçues dans une gorge (6a, 9a) de piste interne de roulement formée dans une bague (7a) de piste interne de roulement montée sur ladite partie (1b) de diamètre plus petit dudit arbre (1) à gradin et retenues dans une gorge (6b, 9b) de piste externe de roulement,
**caractérisée en ce que** ladite gorge (6b, 9b) de piste externe de roulement qui retient lesdites deuxièmes billes (8a, 8b) est formée directement dans une périphérie interne d'une deuxième bague distincte (5, 7b) de piste interne de roulement qui forme un organe composé avec la première bague (3, 5) de piste externe de roulement, l'une des bagues (5) de piste externe de roulement étant en forme de manchon et telle que l'autre bague (3, 7b) de piste de roulement est agencée adjacente à une extrémité opposée à celle sur laquelle sa gorge (2c, 6b) de piste externe de roulement est formée.

2. Combinaison selon la revendication 1, dans laquelle lesdites deuxièmes billes (8a) sont retenues dans ladite gorge (6b) de piste externe de roulement directement formée dans la périphérie interne de ladite bague (5) de piste externe de roulement en forme de manchon.

3. Combinaison selon la revendication 1, dans laquelle lesdites premières billes (4) sont retenues dans ladite gorge (2c) de piste externe de roulement directement formée dans la périphérie interne de ladite bague (5) de piste externe de roulement en forme de manchon.
